# EUROPÄISCHE PATENTSCHRIFT

(11) **EP 1 384 913 B1**
(45) Veröffentlichungstag und Bekanntmachung des Hinweises auf die Patenterteilung: **17.09.2008**
(21) Anmeldenummer: 03016234.1
(22) Anmeldetag: 17.07.2003
(51) Int. Cl.: F16D 65/18, F16D 55/226, F16D 65/14

(54) **Scheibenbremse, insbesondere für Landfahrzeuge**
Disc brake particulary for ground vehicles
Frein à disque pour véhicule terrestre

(30) Priorität: 19.07.2002 DE 10232961
(43) Veröffentlichungstag der Anmeldung: 28.01.2004
(73) Patentinhaber: Wabco Radbremsen GmbH, 68229 Mannheim (DE)
(72) Erfinder: Antony, Paul, Dipl.-Ing., 67550 Worms (DE); Berger, Gerhard, Dipl.-Ing., 76889 Kapellen-Drusweiler (DE); Jäger, Hellmut, Dipl.-Ing., 67067 Ludwigshafen (DE); Stumberg, Ingo, Dipl.-Ing., 30880 Laatzen (DE)
(74) Vertreter: Leinweber & Zimmermann

(56) Entgegenhaltungen:
- DE-A- 19 631 592
- DE-A- 19 741 869
- DE-A- 19 835 550
- US-A- 5 348 123

## Beschreibung

Die Erfindung betrifft eine Scheibenbremse, insbesondere für Landfahrzeuge, mit
einer Bremsscheibe,
einer Bremsbacke,
einer ersten Zuspanneinrichtung, die eine erste sich einerseits mittelbar oder unmittelbar an der Bremsbacke und andererseits mittelbar oder unmittelbar an einem ersten Widerlager abstützende Spreizeinrichtung sowie eine erste Betätigungseinrichtung zum Betätigen der ersten Spreizeinrichtung aufweist, und
einer zweiten Zuspanneinrichtung, die eine zweite Betätigungseinrichtung aufweist.

Scheibenbremsen der eingangs genannten Art sind bekannt, beispielsweise aus der DE-OS 42 31 560 und der DE 43 07 019. Dabei ist die erste Spreizeinrichtung in Form einer Zuspannwelle mit einem Drehhebel ausgeführt. Als erste Betätigungseinrichtung dient dabei ein pneumatischer Betätigungszylinder, der zum Betätigen den Drehhebel verschwenkt und damit die Zuspannwelle verdreht, wodurch die Bremsbacke unter Abstützung an dem von einem Bremssattel gebildeten ersten Widerlager gegen die Bremsscheibe gedrückt wird. Der Betätigungszylinder ist dabei direkt am Bremssattel angeordnet. Er kann aber auch anderweitig befestigt sein. Die Auslegung des Versorgungssystems und die Größe des Betätigungszylinders erfolgen in Abhängigkeit vom Fahrzeuggewicht und in Abstimmung mit den übrigen Bauteilen der Bremse.

Zur Realisierung einer Feststellfunktion für die Bremse ist der Betätigungszylinder als Kombinationszylinder ausgelegt, der neben einem pneumatisch betriebenen Membranzylinder für die Betriebsbremse zusätzlich als zweite Betätigungseinrichtung einen sogenannten Federspeicherzylinder für eine Feststellbremse aufweist. Diese beiden "Teilzylinder" sind in einem gemeinsamen Gehäuse angeordnet. Dabei wird verbreitet für den Zylinderbereich der Feststellbremse im Betätigungs- oder Lösezustand der Bremse das Medium Luft verwendet. Dementsprechend vergrößert muß die Versorgungsanlage im Fahrzeug ausgelegt werden. Darüber hinaus erhöht sich auch die axiale Baulänge der Zylindereinheit - inklusive der daran angeschlossenen Scheibenbremse - um den Teil des Federspeicherzylinders.

Der Erfindung liegt die Aufgabe zugrunde, die Scheibenbremse der eingangs genannten Art derart weiterzubilden, daß ihr Raumbedarf und insbesondere ihre Baulänge minimiert ist. Darüber hinaus soll das pneumatische Betätigungssystem vereinfacht werden, um Teilezahl, Kosten usw. zu reduzieren.

Erfindungsgemäß wird die gestellte Aufgabe gelöst durch eine zweite sich einerseits mittelbar oder unmittelbar an der Bremsbacke und andererseits mittelbar oder unmittelbar an einem zweiten Widerlager abstützende zweite Spreizeinrichtung, die dazu ausgelegt ist, von der zweiten Betätigungseinrichtung betätigt zu werden.

Dadurch, daß eine zweite Spreizeinrichtung vorgesehen ist, die nicht mit der ersten Spreizeinrichtung zusammenfällt, besteht auch keine Notwendigkeit mehr, die zweite Betätigungseinrichtung auf die erste Spreizeinrichtung einwirken zu lassen, wodurch die Anordnung der zweiten Betätigungseinrichtung frei gewählt werden kann. Dadurch besteht die Möglichkeit, die zweite Betätigungseinrichtung derart auszugestalten, daß sie den Bauraum bzw. die Baulänge der Bremse nicht vergrößert. Darüber hinaus muß kein "Kombizylinder" mehr vorgesehen werden, woraus eine erhebliche Vereinfachung resultiert.

Ferner werden folgende Vorteile erzielt:

Es sind zwei redundante Zuspanneinrichtungen vorhanden, die unabhängig voneinander auf die Bremsbacke bzw. eine ihr vorgeschaltete Spindeleinrichtung wirken.

Es liegt ein Split/eine Trennung zwischen Betriebs- und Feststellbremse vor.

Die Bremskräfte der beiden Zuspanneinrichtungen sind bei Bedarf miteinander kombinierbar.

Das Zuschalten bzw. Betreiben einer der beiden Zuspanneinrichtungen erfolgt nur bei Bedarf.

Die Versorgungsgröße Luft für das Betätigen/Lösen eines Federspeicherzylinders ist aus dem Versorgungssystem eliminiert.

Die zweite Betätigungseinrichtung kann erfindungsgemäß prinzipiell beliebig ausgestaltet sein. Bevorzugt ist sie allerdings hydraulisch, elektrohydraulisch, elektrisch oder elektromechanisch betrieben.

Prinzipiell kann die zweite Spreizeinrichtung an beliebiger Stelle in der Bremse angeordnet sein. Bevorzugt liegt sie jedoch zwischen der Bremsbacke und der ersten Spreizeinrichtung. Sie kann aber auch zwischen der ersten Spreizeinrichtung und demjenigen Widerlager liegen, an dem sich die erste Spreizeinrichtung mittelbar oder unmittelbar abstützt. Nach einer weiteren Ausgestaltung kann sie der ersten Spreizeinrichtung parallel geschaltet sein.

Das erste und/oder das zweite Widerlager ist/sind erfindungsgemäß bevorzugt von einem Bremssattel gebildet. Mit anderen Worten handelt es sich bei dieser Ausgestaltung um eine Sattelscheibenbremse.

Das zweite Widerlager ist nach einer besonders bevorzugten Ausführungsform der Erfindung von einem Druckstück gebildet.

Bevorzugt stützt/stützen sich die erste Spreizeinrichtung und/oder die zweite Spreizeinrichtung über ein Druckstück und/oder eine Nachstellspindel an der Bremsbacke ab.

Wie bereits eingangs erwähnt handelt es sich bei der ersten Spreizeinrichtung bevorzugt um eine Zuspannwelle, die dazu ausgelegt ist, von der ersten Betätigungseinrichtung verdreht zu werden.

Dabei ist die erste Betätigungseinrichtung bevorzugt pneumatisch betrieben.

Nach einer weiter bevorzugten Ausführungsform der Erfindung ist eine Notlöseeinrichtung für die Bremse vorgesehen.

Darüber hinaus ist bevorzugt eine Blockiereinrichtung vorgesehen, die einem ungewollten Lösen der zweiten Zuspanneinrichtung entgegenwirkt.

Schließlich ist die Bremse nach einer weiter bevorzugten Ausführungsform zum Einsatz an einem Vorderrad eines Landfahrzeuges, insbesondere eines Nutzfahrzeuges ausgelegt, was nur durch die erfindungsgemäß erzielbare kompakte Bauweise möglich ist. Selbstverständlich ist auch eine (gleichzeitige) Auslegung für ein Hinterrad möglich.

Entsprechend den obigen Erläuterungen kann der Bereich Federspeicherzylinder durch ein anderes Medium ersetzt werden, welches nicht die axiale Baulänge eines herkömmlichen Membranzylinders inklusive der Scheibenbremse verlängert und welches auch insofern nicht auf den Drehhebel der Zuspannwelle einwirkt, daß dieser für die Feststellbremse zu verschwenken ist. Das erfindungsgemäß eingesetzte Medium bewirkt mithin eine Spreizbewegung, ohne dabei den Drehhebel zu verschwenken. Dabei bedient sich die Erfindung der Lehre, daß auf die Bremsbacke ein vom pneumatischen Versorgungssystem unabhängiges Medium als weiterer Antrieb einwirkt. Dadurch, daß dieses weitere Medium an nahezu beliebiger Stelle am oder im Bremssattel angeordnet werden kann, wird eine Verkürzung der Baulänge erreicht.

Bei Einbeziehung einer Nachstellspindel und/oder eines Druckstücks wird erreicht, daß sich auch die zweite Spreizeinrichtung all derjenigen Bremsenteile bedient, die auch von der ersten Zuspanneinrichtung verwendet werden, allerdings ohne die Zuspannwelle und den Drehhebel. Dadurch bleibt der Drehhebel bei Betätigung durch die zweite Betätigungseinrichtung stehen und mithin in Kontakt mit der Kolbenstange des Betätigungszylinders der ersten Zuspannvorrichtung, worin ein großer Vorteil für die Sicherheit der Bremsenfunktion liegt.

Würde sich nämlich zum Beispiel die Erfindung einer anderen Lehre bedienen und die zweite Betätigungseinrichtung ebenfalls auf den Bremshebel wirken lassen, so würde sich die Stellung des Bremshebels gegenüber der Kolbenstange bei nicht aktiviertem Betätigungszylinder verändern. Eine Entkopplung dieser beiden Teile hätte aber zur Folge, daß bei einer nachfolgenden Ansteuerung des Betätigungszylinders die Kolbenstange nicht mehr auf den Anlagebereich des Bremshebels trifft, wodurch ein Verlust der Bremsenfunktion einträte.

Durch den Einsatz der Erfindung im Nutzfahrzeugbereich wird es möglich, neben der Hinterachse auch Vorderachsen mit Feststellbremsfunktionen zu versehen, was bisher aufgrund der beengten Einbauverhältnisse nicht oder nur durch Zylinder mit entsprechend dem beschränkten Bauraum verringerter Zuspannkraft möglich war. Durch die Verteilung der Feststellfunktion auf mehr als bisher nur eine Achse reduzieren sich die Ausnutzungsgrade des Haftschlusses zur Straße, und die Sicherheit des abgestellten Fahrzeuges wird erhöht.

Ein weiterer Vorteil der erfindungsgemäßen Lösung ergibt sich dadurch, daß sich für Notbremsungen beide Spreizeinrichtungen gleichzeitig betreiben lassen, so daß höhere Klemmkräfte - und damit höhere Bremsmomente - erzielbar sind, wodurch der Bremsweg verkürzt werden kann. Zudem ist es durch die Integration der erfindungsgemäßen weiteren Spreizeinrichtung erst möglich, grundsätzlich mit derjenigen Spreizeinrichtung zu bremsen, deren Energieerzeugung am wirtschaftlichsten erfolgt und die weitere Spreizeinrichtung nur für Fahrzeugverzögerungen einzusetzen, die die andere Spreizeinrichtung nicht mehr leisten kann.

Im folgenden ist die Erfindung anhand bevorzugter Ausführungsbeispiele unter Bezugnahme auf die beiliegende Zeichnung mit weiteren Einzelheiten näher erläutert. Dabei zeigen
- die Figuren 1 und 2: schematische Schnittansichten einer Scheibenbremse nach einem ersten Ausführungsbeispiel der Erfindung,
- die Figuren 3 und 4: schematische Schnittansichten einer Scheibenbremse nach einem zweiten Ausführungsbeispiel der Erfindung,
- Figur 5: eine schematische Schnittansicht einer Scheibenbremse nach einem dritten Ausführungsbeispiel der Erfindung und
- Figur 6: eine schematische Schnittansicht einer Scheibenbremse nach einem vierten Ausführungsbeispiel der Erfindung.

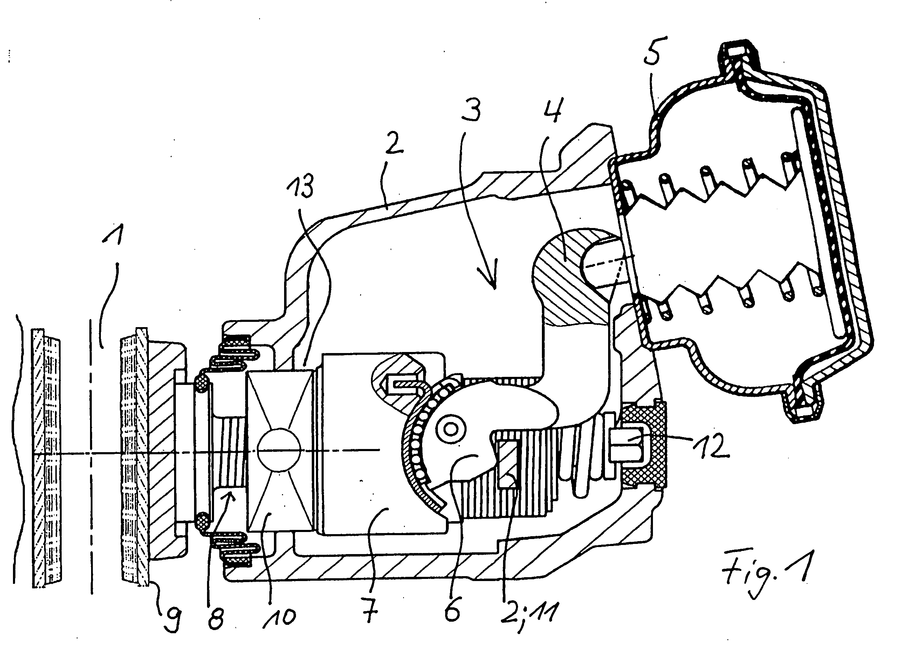

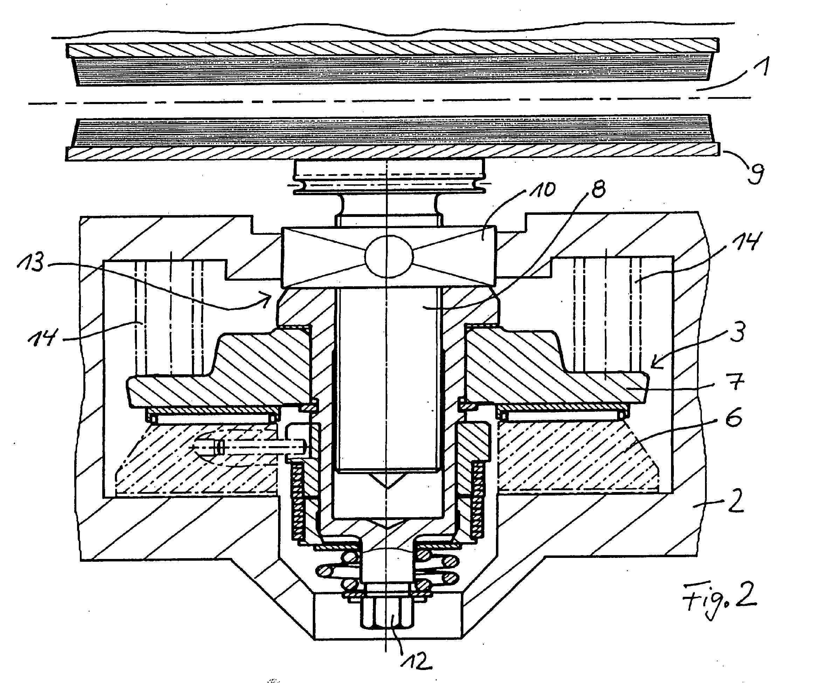

Die Figuren 1 und 2 zeigen einen eine Bremsscheibe 1 umfassenden Bremssattel 2 einer Scheibenbremse. Dieser Sattel kann Teil eines Gleit- oder Festsattels sein. Eine erste Zuspanneinrichtung ist mit der Bezugszahl 3 bezeichnet. Die erste Zuspanneinrichtung 3 weist einen Drehhebel 4 auf, an dessen radialem Ende eine Kolbenstange eines an dem Bremssattel 2 befestigten pneumatischen Bremszylinders 5 angreift. Andererseits ist der Drehhebel 4 mit einer eine Nockenkontur aufweisenden Bremswelle 6 verbunden, die in dem Sattel 2 um eine zur Ebene der Bremsscheibe 1 parallel verlaufende Drehachse drehbar gelagert ist und die sich bremsscheibenabgewandt an einer Reaktionsfläche 11 des Bremssattels 2 abstützt.

Eine Drehung der Bremswelle 6 erfolgt dann, wenn der als Pneumatikzylinder ausgestaltete Bremszylinder 5 über seine Kolbenstange den Drehhebel 4 verschwenkt. Die Bremswelle 6 wirkt entgegen einem im Bremssattel 2 verschiebbar gelagerten Druckstück 7, welches sich parallel zur Drehachse der Bremswelle 6 erstreckt und welches mindestens eine darin gelagerte Druckspindel 8 trägt. Die Druckspindel 8 ist Teil eines Nachstellgetriebes, das allgemein bekannt ist, beispielsweise aus der DE-OS 195 07 308, weshalb es hier nicht weiter erläutert ist.

Die aus dem Druckstück 7 und der Druckspindel 8 gebildete Einheit ist gegen die Vorspannkraft einer Druckfeder 14 (Figur 2) axial zusammen mit einer Bremsbacke 9 verschiebbar, um die Bremsbacke 9 gegen die Bremsscheibe 1 zu drücken.

Eine zweite Zuspanneinrichtung ist mit der Bezugszahl 10 bezeichnet. Wenngleich dies nicht im einzelnen dargestellt ist, weist die zweite Zuspanneinrichtung 10 eine beispielsweise elektrisch betriebene Betätigungseinrichtung sowie eine Spreizeinrichtung auf. Die zweite Zuspanneinrichtung 10 ist derart angeordnet, daß sie bei Ansteuerung eine Relativbewegung zwischen der Druckspindel 8 einerseits und dem Sattel 2 andererseits bewirkt.

Die Druckspindel 8 kann als Spindel-/Mutteranordnung oder als Spindel-/Kugelumlaufbüchsenanordung ausgeführt sein. Sie kann dabei in dem Druckstück 7 längsverstellbar gelagert sein. Das Druckstück kann auch entfallen. In diesem Fall wird die Druckspindel 8 (abgesehen von der zweiten Zuspanneinrichtung 10) direkt von der Bremswelle 6 beaufschlagt.

Insgesamt erfolgt also eine Beaufschlagung der Druckspindel 8 durch die Bremswelle 6 und/oder durch die zweite Zuspanneinrichung 10 in beliebiger bzw. erforderlicher Kombination.

Der Aufbau der zweiten Zuspanneinrichtung 10 kann derart sein, daß er entweder direkt oder über eine nicht gezeigte Getriebeeinrichtung in die Zuspannung eingreift und somit eine Längsverstellung veranlaßt.

Bei der Ausgestaltung nach den Figuren 1 und 2 ist eine Stellvorrichtung 12 vorgesehen, mittels derer entweder eine Bremseinstellung und/oder ein Notlösevorgang vorgenommen werden kann. Darüber hinaus ist eine Blockiereinrichtung 13 vorgesehen, um bei einer durch die zweite Zuspanneinrichtung 10 veranlaßten Feststellung ein unbeabsichtigtes Lösen der Bremse zu verhindern. Dies kann z.B. durch eine selbsthemmende Gewindepaarung, durch ein Klemmgesperre oder ähnliches erfolgen.

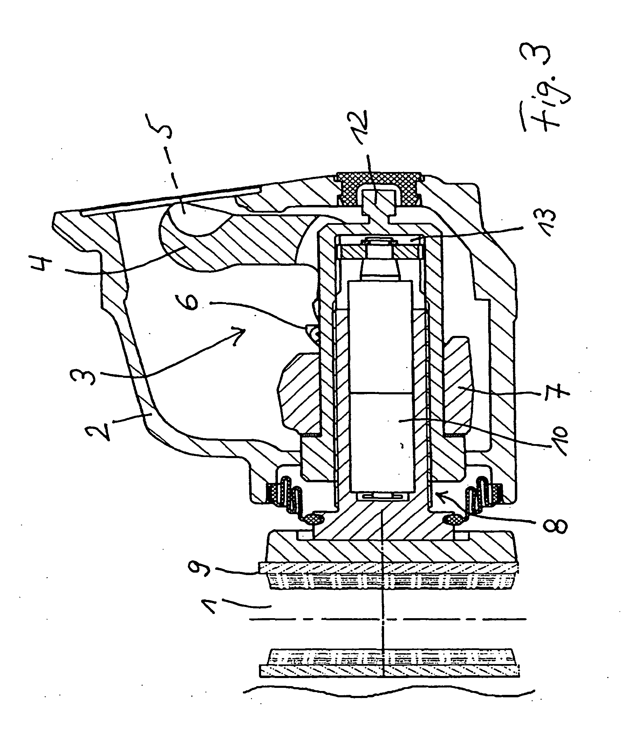

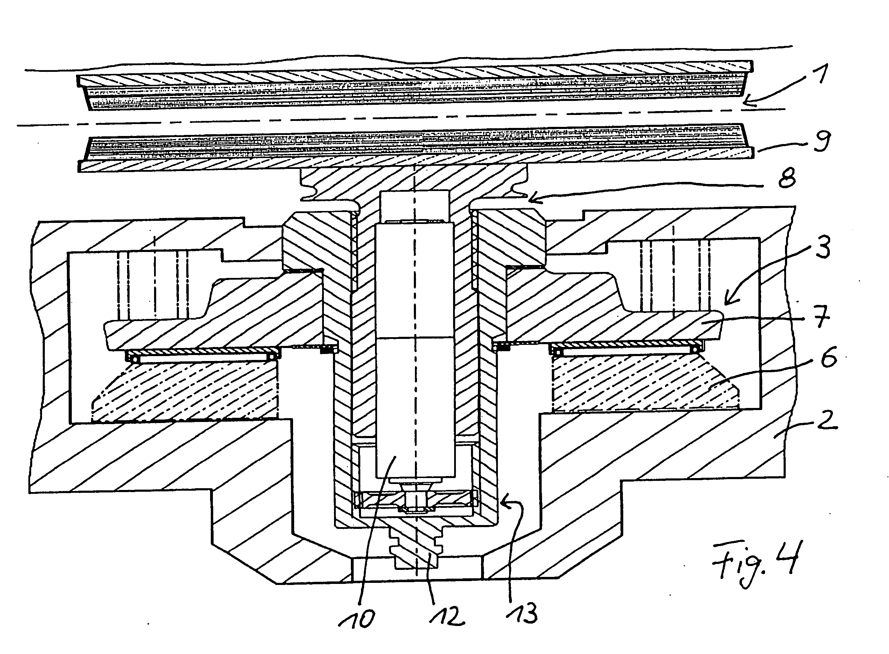

Bei dem Ausführungsbeispiel nach den Figuren 1 und 2 ist die zweite Zuspanneinrichtung 10 am Außenumfang der Druckspindel 8 innerhalb der ersten Zuspanneinrichtung 3 angeordnet. Bei Verwendung gleicher Bezugszeichen zeigen hingegen die Figuren 3 und 4 eine innerhalb der Druckspindel 8 angeordnete zweite Zuspanneinrichtung 10. Auch hier wirkt diese von dem Pneumatikzylinder 5 unabhängige zweite Zuspanneinrichtung derart auf die Druckspindel 8, daß die Druckspindel 8 längsverstellbar ist und mit einer Klemmkraft gegen die Bremsbacke 9 drückt.

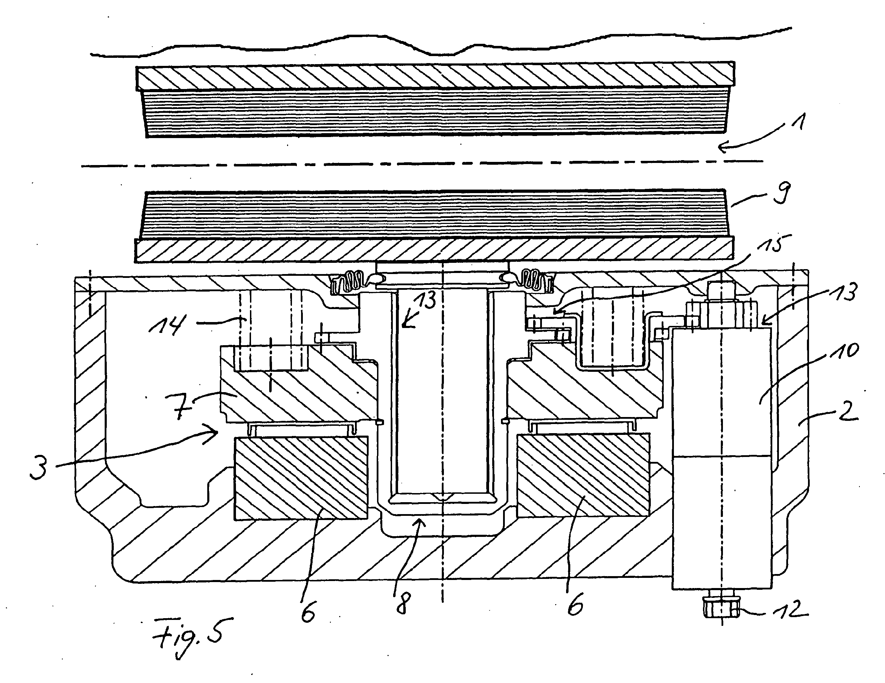

Die Figur 5 zeigt die zweite Zuspanneinrichtung 10 in einer räumlich innerhalb des Bremssattels 2 anders angeordneten Art. Während die zweite Zuspanneinrichtung 10 bei den Ausführungsformen nach den Figuren 1 bis 4 koaxial um die Verstellachse der Druckspindel 8 angeordnet war, liegt sie bei diesem Ausführungsbeispiel in einer zu der genannten Verstellachse parallelen Achse. Auch bei dieser Ausführung ist die zweite Zuspanneinrichtung entweder direkt oder über ein Zahnradgetriebe mit oder ohne Untersetzung mit der Druckspindel 8 gekoppelt. Die zweite Zuspanneinrichtung 10 kann auch selbst ein Getriebe aufweisen, mit dem Drehmomente eingeleitet werden.

Wie auch bei den anderen Ausführungen wird der Drehhebel 4 mittels der angelenkten Kolbenstange des pneumatischen Bremszylinders 5 verdreht, wodurch sich auch die damit verbundene Bremswelle 6 um ihre parallel zur Bremsscheibenebene liegende Drehachse dreht. Diese ist an einem Bremssattel bzw. in einem davon abkoppelbaren Teil so abgestützt, daß deren Wegzunahme eine axiale Verschiebung der vorgelagerten Teile gegen eine Bremsbacke 9 bewirkt. Diese Teile bestehen aus mindestens einer längsverstellbaren Spindel-/Muttereinrichtung 8, die entweder direkt im Bremssattel oder wie in den Figuren dargestellt in einem Druckstück 7 gelagert ist. Ist die zweite Zuspanneinrichtung 10 inaktiv, so nimmt sie auch keinen Einfluß auf den durch den Betätigungszylinder eingeleiteten Bremsvorgang. Wird sie jedoch aktiviert, so bedient sie sich hier über den direkten Eingriff auf den Spindelmechanismus, oder unter Zwischenschaltung einer Getriebeeinrichtung auf diesen derart, daß eine Längsverstellung durch Drehung der Spindel-/ Muttereinrichtung in Richtung Bremsbacke 9 erfolgt. Dabei dienen Teile der Zuspanneinrichtung 3 bzw. der Spreizeinrichtung 6 als Abstützung entgegen dem Bremssattel. Ist der Bremszylinder unbetätigt und die zweite Zuspanneinrichtung 10 aktiviert, so erfolgt, wie bereits erwähnt, der Feststellvorgang über eine Spreizung zur Feststellung des Fahrzeugrades, jedoch ohne dabei eine Verdrehung des Drehhebels 4 zu bewirken. Eine Entkopplung zwischen Kolbenstange und Drehhebel ist somit bei einer Feststellung der Bremse ausgeschlossen. Selbstverständlich kann in beliebigen Kombinationen bzw. solo die Zuspannvorrichtung 10 mit der ersten Spreizeinrichtung 6 zusammenwirken.

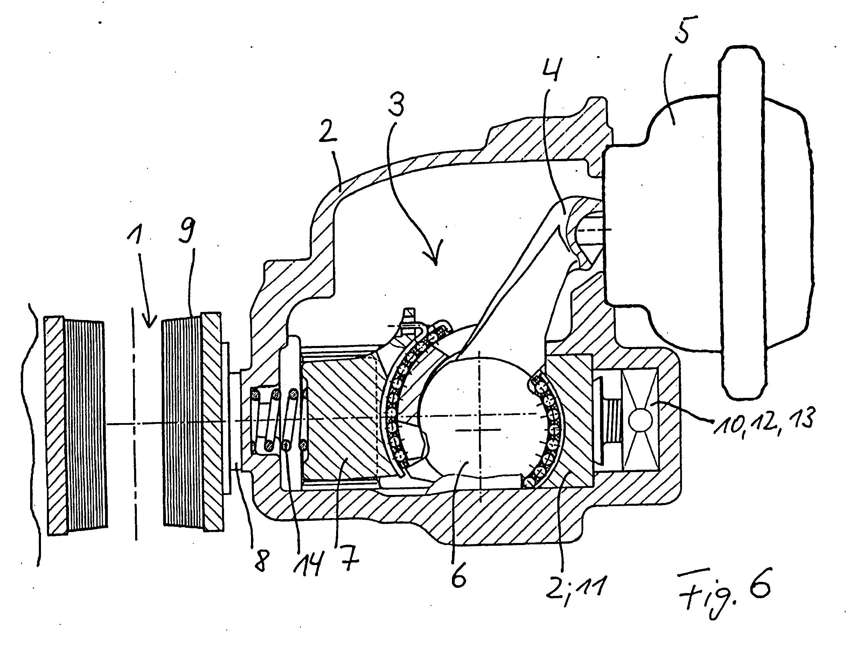

Figur 6 zeigt eine Ausführungsform mit einer zweiten Zuspanneinrichtung 10, die derart innerhalb des Bremssattels 2 zum Bewirken einer Verschiebung der ersten Zuspanneinrichtung 3 angeordnet ist, daß sie gegen die der ersten Zuspanneinrichtung 3 dienenden Reaktionsfläche 11 wirkt. Dafür stützt sich die Reaktionsfläche 11 gegen den Bremssattel 2 ab, ist aber andererseits in Richtung Bremsscheibe 1 vom Bremssattel 2 entkoppelbar, wodurch bei einer Krafteinleitung mittels der zweiten Zuspanneinrichtung 10 die gesamte erste Zuspannung 3 entgegen der Bremsbacke 9 verschoben wird. Diese Anordnung der zweiten Zuspanneinrichtung 10 zur Verschiebung der Reaktionsfläche 11 ist selbstverständlich auch für die anderen Ausführungsbeispiele verwendbar. Ebenso sind auch hier eine Stellvorrichtung 12 und eine Blockiereinrichtung 13 zur Erfüllung der bereits erwähnten Funktionen vorhanden.

Wie bereits anfangs erläutert, kann die zweite Zuspanneinrichtung 10 über verschiedene Medien realisiert sein, um eine Klemmkraft auszuüben. Bevorzugt ist die elektrische bzw. elektromechanische Ausführung. Die zweite Zuspanneinrichtung 10 kann entsprechend der jeweiligen Bremssituation bzw. der jeweiligen Bremsanforderungen wirksam werden bzw. eingreifen. Sie kann sowohl einzeln, als auch zusätzlich zum Pneumatikzylinder, in wechselseitiger Kombination mit diesem, zur schnellen Lüftspiel-überwindung und zur Lüftspieleinstellung verwendet werden.

Die in der obigen Beschreibung, den Ansprüchen sowie der Zeichnung offenbarten Merkmale der Erfindung können sowohl einzeln als auch in beliebiger Kombination für die Verwirklichung der Erfindung in ihren verschiedenen Ausführungsformen wesentlich sein.

## Patentansprüche

1. Scheibenbremse, insbesondere für Landfahrzeuge, mit
einer Bremsscheibe (1),
einer Bremsbacke (9),
einer pneumatisch betätigten ersten Zuspanneinrichtung (3), die eine erste sich einerseits mittelbar oder unmittelbar an der Bremsbacke (9) und anderseits mittelbar oder unmittelbar an einem ersten Widerlager (2, 11) abstützende Spreizeinrichtung (6) sowie eine erste Betätigungseinrichtung (5) zum Betätigen der ersten Spreizeinrichtung (6) aufweist, und
einer elektrisch betätigten zweiten Zuspanneinrichtung (10, 7, 8), die eine zweite Betätigungseinrichtung sowie eine sich einerseits mittelbar oder unmittelbar an der Bremsbacke (9) und andererseits mittelbar oder unmittelbar an einem zweiten Widerlager (11, 2) abstützende zweite Spreizeinrichtung (7, 8) aufweist, die dazu ausgelegt ist, von der zweiten Betätigungseinrichtung betätigt zu werden, wobei
die zweite Spreizeinrichtung (7, 8) einen Spindelmechanismus mit einer zu einem Nachstellgetriebe gehörenden Druckspindel (8) aufweist und die zweite Betätigungseinrichtung dazu ausgelegt ist, bei Aktivierung den Spindelmechanismus durch Drehen in Längsrichtung zu verstellen.

2. Scheibenbremse nach Anspruch 1, **dadurch gekennzeichnet, daß** die zweite Spreizeinrichtung zwischen der Bremsbacke (9) und der ersten Spreizeinrichtung (6) liegt.

3. Scheibenbremse nach Anspruch 1, **dadurch gekennzeichnet, daß** die zweite Spreizeinrichtung zwischen der ersten Spreizeinrichtung (6) und demjenigen Widerlager (2, 11) liegt, an dem sich die erste Spreizeinrichtung (6) mittelbar oder unmittelbar abstützt.

4. Scheibenbremse nach Anspruch 1, **dadurch gekennzeichnet, daß** die zweite Spreizeinrichtung der ersten Spreizeinrichtung (6) parallel geschaltet ist.

5. Scheibenbremse nach einem der vorangehenden Ansprüche, **dadurch gekennzeichnet, daß** das erste und/oder das zweite Widerlager von einem Bremssattel (2, 11) gebildet ist/sind.

6. Scheibenbremse nach einem der vorangehenden Ansprüche, **dadurch gekennzeichnet, daß** das zweite Widerlager von einem Druckstück (7) gebildet ist.

7. Scheibenbremse nach einem der vorangehenden Ansprüche, **dadurch gekennzeichnet, daß** sich die erste Spreizeinrichtung (6) über ein Druckstück (7) und/oder eine Nachstellspindel (8) an der Bremsbacke (9) abstützt/abstützen.

8. Scheibenbremse nach einem der vorangehenden Ansprüche, **dadurch gekennzeichnet, daß** das erste Spreizelement (6) eine Zuspannwelle ist, die dazu ausgelegt ist, von der ersten Betätigungseinrichtung (5) verdreht zu werden.

9. Scheibenbremse nach einem der vorangehenden Ansprüche, **gekennzeichnet durch** eine Notlöseeinrichtung (12).

10. Scheibenbremse nach einem der vorangehenden Ansprüche, **gekennzeichnet durch** eine Blockiereinrichtung (13), die einem ungewollten Lösen der zweiten Zuspanneinrichtung (10) entgegenwirkt.

11. Scheibenbremse nach einem der vorangehenden Ansprüche, **dadurch gekennzeichnet, daß** sie zum Einsatz an einem Vorderrad und/oder einem Hinterrad eines Landfahrzeuges, insbesondere eines Nutzfahrzeuges ausgelegt ist.

## Claims

1. A disc brake, particularly for ground vehicles, with
a brake disc (1),
a brake shoe (9),
a pneumatically actuated first clamping device (3) which has a first expansion device (6) supported on the one hand indirectly or directly on the brake shoe (9) and on the other hand indirectly or directly on a first thrust bearing (2, 11), and a first actuation device (5) for actuating the first expansion device (6), and
an electrically actuated second clamping device (10, 7, 8) which has a second actuation device and a second expansion device (7, 8) supported on the one hand indirectly or directly on the brake shoe (9) and on the other hand indirectly or directly on a second thrust bearing (11,2), which is designed to be actuated by the second actuation device,
the second expansion device (7, 8) having a spindle mechanism with a compression spindle (8) belonging to an adjustment gear, and the second actuation device being designed to adjust in the longitudinal direction by turning when the spindle mechanism is activated.

2. The disc brake according to Claim 1, **characterised in that** the second expansion device lies between the brake shoe (9) and the first expansion device (6).

3. The disc brake according to Claim 1, **characterised in that** the second expansion device lies between the first expansion device (6) and the thrust bearing (2, 11) on which the first expansion device (6) is supported indirectly or directly.

4. The disc brake according to Claim 1, **characterised in that** the second expansion device is connected parallel to the first expansion device (6).

5. The disc brake according to any of the preceding claims, **characterised in that** the first and/or second thrust bearing is/are formed by a brake calliper (2, 11).

6. The disc brake according to any of the preceding claims, **characterised in that** the second thrust bearing is formed by a pressure piece (7).

7. The disc brake according to any of the preceding claims, **characterised in that** the first expansion device (6) is supported by means of a pressure piece (7) and/or an adjustment spindle (8) on the brake shoe (9).

8. The disc brake according to any of the preceding claims, **characterised in that** the first expansion element (6) is a clamping shaft which is designed to be turned by the first actuation device (5).

9. The disc brake according to any of the preceding claims, **characterised by** an emergency release device (12).

10. The disc brake according to any of the preceding claims, **characterised by** a blocking device (13) which counteracts any undesired release of the second clamping device (10).

11. The disc brake according to any of the preceding claims, **characterised in that** it is designed for use on a front wheel and/or a rear wheel of a ground vehicle, in particular a utility vehicle.

## Revendications

1. Frein à disque, en particulier pour véhicules routiers, avec un disque de frein (1), avec une mâchoire de frein (9), avec un premier dispositif de serrage actionné pneumatiquement (3) comportant un premier dispositif d'écartement (6), qui prend appui d'une part indirectement ou directement sur la mâchoire de frein (9) et d'autre part indirectement ou directement sur un premier contre-appui (2, 11), ainsi qu'un premier dispositif d'actionnement (5) pour actionner le premier dispositif d'écartement (6), et avec un second dispositif de serrage actionné pneumatiquement (10, 7, 8) comportant un second dispositif d'actionnement ainsi qu'un second dispositif d'écartement (7, 8) qui prend appui d'une part indirectement ou directement sur la mâchoire de frein (9) et d'autre part indirectement ou directement sur un second contre-appui (11, 2) et qui est conçu pour être actionné par le second dispositif d'actionnement, le second dispositif d'écartement (7, 8) comportant un mécanisme à broche avec une broche de pression (8) appartenant à un mécanisme de réajustage et le second dispositif d'actionnement étant conçu pour, lorsqu'il est activé, déplacer le mécanisme à broche par rotation dans la direction longitudinale.

2. Frein à disque selon la revendication 1, **caractérisé en ce que** le second dispositif d'écartement est disposé entre la mâchoire de frein (9) et le premier dispositif d'écartement (6).

3. Frein à disque selon la revendication 1, **caractérisé en ce que** le second dispositif d'écartement est disposé entre le premier dispositif d'écartement (6) et le contre-appui (2, 11) sur lequel le premier dispositif d'écartement (6) prend appui indirectement ou directement.

4. Frein à disque selon la revendication 1, **caractérisé en ce que** le second dispositif d'écartement est monté en parallèle au premier dispositif d'écartement (6).

5. Frein à disque selon une des revendications précédentes, **caractérisé en ce que** le premier et/ou le second contre-appui est/sont formé(s) par un étrier de frein (2, 11).

6. Frein à disque selon une des revendications précédentes, **caractérisé en ce que** le second contre-appui est formé par une pièce de pression (7).

7. Frein à disque selon une des revendications précédentes, **caractérisé en ce que** le premier dispositif d'écartement (6) prend appui sur la mâchoire de frein (9) par l'intermédiaire d'une pièce de pression (7) et/ou d'une broche de réajustage (8).

8. Frein à disque selon une des revendications précédentes, **caractérisé en ce que** le premier dispositif d'écartement (6) est un arbre de serrage qui est conçu pour être mis en rotation par le premier dispositif d'actionnement (5).

9. Frein à disque selon une des revendications précédentes, **caractérisé par** un dispositif de desserrage de secours (12).

10. Frein à disque selon une des revendications précédentes, **caractérisé par** un dispositif de blocage (13) qui s'oppose à un desserrage accidentel du second dispositif de serrage (10).

11. Frein à disque selon une des revendications précédentes, **caractérisé en ce qu'**il est conçu pour être mis en oeuvre sur une roue avant et/ou sur une roue arrière d'un véhicule routier, en particulier d'un véhicule utilitaire.
